# NEUE EUROPÄISCHE PATENTSCHRIFT

(11) **EP 1 117 555 B2**
(45) Veröffentlichungstag und Bekanntmachung des Hinweises auf die Entscheidung über den Einspruch: **02.11.2006**
(45) Hinweis auf die Patenterteilung: 23.10.2002
(21) Anmeldenummer: 99970062.8
(22) Anmeldetag: 27.09.1999
(51) Int. Cl.: B60K 17/04, B62D 55/125

(54) **KETTENFAHRZEUG MIT ANTRIEBSEINHEIT**
TRACKED VEHICLE WITH A DRIVE UNIT
VEHICULE CHENILLE AVEC UNITE D'ENTRAINEMENT

(30) Priorität: 02.10.1998 DE 19845494
(43) Veröffentlichungstag der Anmeldung: 25.07.2001
(73) Patentinhaber: Krauss-Maffei Wegmann GmbH & Co. KG, 34127 Kassel (DE)
(72) Erfinder: SCHLEGL, Eugen, Bernhard, D-82194 Gröbenzell (DE); WESTERMANN, Harald, D-85247 Schwabhausen (DE)
(74) Vertreter: Feder, Wolf-Dietrich
(86) Internationale Anmeldenummer: PCT/DE1999/003123
(87) Internationale Veröffentlichungsnummer: WO 2000/020245

(56) Entgegenhaltungen:
- EP-A- 0 974 510
- EP-B- 0 479 016
- DE-A- 2 555 021
- DE-A- 3 146 661
- DE-A- 3 725 920
- DE-A- 4 123 778
- DE-A- 19 503 477
- DE-A- 19 537 945
- DE-C- 4 310 008
- DE-C- 4 323 539
- DE-C- 19 653 283
- DE-T- 69 019 522
- US-A- 4 554 989
- US-A- 4 893 687

## Beschreibung

Die Erfindung betrifft ein Kettenfahrzeug gemäß der im Oberbegriff des Patentanspruches 1 angegebenen Art.

Derartige Kettenfahrzeuge sind sowohl im zivilen Bereich, beispielsweise als Baumaschinen, als auch im militärischen Bereich, z. B. als Panzerkampfwagen, bekannt.

Ein solches Kettenfahrzeug weist in der Regel zwei seitlich gelagerte Ketten auf, die von einem Kettenlaufwerk getragen und jeweils über ein Antriebsrad angetrieben werden. Das Antriebsrad ist Teil einerjeder angetriebenen Kette zugeordneten Antriebseinheit, die zudem noch einen Elektromotor, ein dem Antriebsrad vorgeschaltetes Getriebe und eine den Elektromotor und das Getriebe triebschlüssig miteinander verbindende Welle aufweist. Sowohl die Antriebseinheit als auch das Kettenlaufwerk sind an einer Fahrzeugwanne angeordnet. Hierbei ist der Elektromotor auf der Innenseite und das Kettenlaufwerk auf der Außenseite unmittelbar an der Fahrzeugwanne befestigt. Durch die Fahrzeugwanne hindurch erstreckt sich die Welle, die das als Planetengetriebe ausgebildete Getriebe antreibt. Das Getriebe treibt schließlich das Antriebsrad an und dieses treibt wiederum die Kette an. Das Getriebe ist auf der Außenseite unmittelbar an der Fahrzeugwanne befestigt.

Problematisch ist nun, daß es während des Betriebes des Kettenfahrzeuges zum einen zu antriebsbedingten Kettenschwingungen und zum anderen aufgrund der Unebenheiten des überfahrenen Bodens ebenfalls zu Kettenschwingungen kommt, die auf das Kettenlaufwerk und das Antriebsrad sowie schließlich auf die Fahrzeugwanne übertragen werden. Diese Schwingungen können zu einer starken Beeinträchtigung des Fahrzeugführers und der Mannschaft im Fahrzeug führen, da diese dann einer ständigen Rüttelbewegung ausgesetzt sind.

Zudem führen die Schwingungen zu einer starken Beeinträchtigung der in einem Panzerkampfwagen vorgesehenen optischen Einrichtungen.

Erschwerend kommt hinzu, daß ein Elektromotor Teil der Antriebseinheit ist, bei dem der Abstand zwischen Stator und Rotor möglichst gering sein muß, um einen hohen Wirkungsgrad zu erzielen. Die Schwingungen werden nun aber unmittelbar in den Rotor eingeleitet und auf den Stator übertragen, so daß es zum Ausfall des Elektromotors kommen kann, wenn der Rotor und der Stator nicht synchron schwingen und aneinanderschlagen.

Aus der gattungsgemäßen DE 25 55 021 A ist eine Lagerung eines anderen Antriebskonzeptes für ein Kettenfahrzeug bekannt. Ein Antriebsrad für die Kette und ein erstes Getriebe sind in einer Wandung der Fahrzeugwanne des Kettenfahrzeuges elastisch gelagert. Das weitere Getriebe und das Antriebsaggregat sind separat in der Fahrzeugwanne gelagert und werden über eine Kardanwelle miteinander verbunden. Dieses Antriebskonzept hat den Nachteil, daß über die Kardanwelle, das Getriebe und das Antriebsaggregat weiterhin Schwingungen in die Fahrzeugwanne übertragen werden. Zudem ist der Antrieb sehr groß bauend und unflexibel in der Anordnung im Fahrzeug.
In dem gegenüber dem Prioritätstag nicht vorveröffentlichten Dokument EP 0 974 510 A1 ist ein Gleiskettenfahrzeug beschrieben mit einem beidseitig des Fahrzeuggehäuses angeordneten und angetriebenen Laufwerk, wobei Laufwerk und Fahrzeuggehäuse unter Zwischenschaltung eines schwingungsdämpfenden Materials miteinander verbunden sind. Das Laufwerk ist über ein u-förmiges Brückenelement mit seitlichen Laufwerksträgern unter Verwendung einer verbindenden Bodenplatte aufgenommen, wobei die Laufwerksträger jeweils als Kettenantrieb einen elektrischen Antriebsmotor aufweisen. Das Fahrzeuggehäuse ist über schwingungsdämpfende Elemente in das Brückenelement eingehängt.
Weiterhin ist in DE 195 37 945 A1 ein Kettenfahrzeug beschrieben, bei welchem den Kettenantriebsrädern elektrische Motore zugeordnet sind, die in den Eckbereichen der Fahrzeugwanne angeordnet sein sollen.

Der Erfindung liegt die Aufgabe zugrunde, ein Kettenfahrzeug gemäß der im Oberbegriff des Anspruches 1 angegebenen Art derart weiterzubilden, daß unter Vermeidung der genannten Nachtelle die über die Kette auf das Antriebsrad eingeleiteten Schwingungen nicht auf die Fahrzeugwanne übertragen werden.

Diese Aufgabe wird durch die kennzeichnenden Merkmale des Anspruches 1 in Verbindung mit seinen Oberbegriffsmerkmalen gelöst.

Der Erfindung liegt die Erkenntnis zugrunde, daß durch eine schwingungsmäßige Trennung zwischen der aus Antriebsrad, Getriebe, Welle und Elektromotor bestehenden Antriebseinheit und dem-die Antriebseinheit aufnehmenden Lager, nämlich die Fahrzeugwanne, eine Übertragung der Schwingungen mit einfachen Mitteln ausgeschlossen wird.

Nach der Erfindung sind daher zwischen der Wandung der Fahrzeugwanne einerseits und der Antriebseinheit andererseits Schwingungsdämpfungsmittel zwischengeschaltet, so daß die Antriebseinheit von der Wandung der Fahrzeugwanne schwingungsmäßig entkoppelt ist.

Gemäß einer Ausführungsform der Erfindung sind die Schwingungsdämpfungsmittel an einer Seite der Wandung, nämlich an der Innenseite oder an der Außenseite, vorgesehen. Beispielsweise um die Kette möglichst nah an der Wandung der Fahrzeugwanne zu führen, sind die Schwingungsdämpfungsmittel an der Innenseite der Wandung angebracht, so daß Teile der Antriebseinheit innerhalb der Fahrzeugwanne angeordnet werden können. Will man dagegen möglichst viel Platz im Innenraum schaffen, ist es günstig, die Schwingungsdämpfungsmittel auf der Außenseite anzuordnen. Dadurch wird ermöglicht, beispielsweise die komplette Antriebseinheit außerhalb der Fahrzeugwanne anzuordnen.

Alternativ hierzu sind gemäß einer anderen Ausführungsform der Erfindung die Schwingungsdämpfungsmittel sowohl an der Innenseite als auch an der Außenseite angeordnet. Hierdurch ist es möglich, einen Teil der Antriebseinheit innerhalb der Fahrzeugwanne und einen anderen Teil der Antriebseinheit außerhalb der Fahrzeugwanne anzuordnen und entsprechend den auftretenden Schwingungen eine feine Abstimmung der Schwingungsdämpfungsmittel vorzunehmen. Die inneren Schwingungsdämpfungsmittel können dabei gegenüber den äußeren Schwingungsdämpfungsmitteln eine andere Dämpfungscharakteristik aufweisen.

Das Getriebe und der Elektromotor der Antriebseinheit weisen jeweils eine statische Einheit und eine rotierende Einheit auf. Die statische Einheit des Getriebes und/oder des Elektromotors sind mit den Schwingungsdämpfungsmitteln verbunden.

Gemäß einer Ausführungsform der Erfindung ist die statische Einheit des Elektromotors mit den Schwingungsdämpfungsmitteln auf der Innenseite und die statische Einheit des Getriebes mit den Schwingungsdämpfungsmitteln auf der Außenseite der Wandung der Fahrzeugwanneverbunden. Hierdurch wird eine frühzeitige Dämpfung ermöglicht und ein Aufschwingen durch die Weiterleitung der Schwingungen in der Antriebseinheit verhindert.

Gemäß einer Ausführungsform der Erfindung sind die statischen Einheiten des Elektromotors und des Getriebes starr miteinander verbunden, wobei zumindest eine statische Einheit über die Schwingungsdämpfungsmittel an die Wandung angeschlossen ist. Hierdurch wird auf einfache Weise vermieden, daß es zu Relativbewegungen der statischen Einheiten zueinander und somit auch der rotierenden Einheiten zueinander kommt.

Alternativ hierzu sind die statischen Einheiten des Getriebes und des Elektromotors über Mittel zur Übertragung eines Drehmomentes miteinanderverbunden, die einen Ausgleich radialer und axialer Relativbewegungen der statischen Einheiten zueinander ermöglichen. Derartige Relativbewegungen können während des Betriebes infolge durch Bodenunebenheiten hervorgerufene plötzliche Kettenspannungen auftreten.

Für bestimmte Anforderungen kann es notwendig sein, den Elektromotor auf der einen Seite und das Antriebsrad auf der anderen Seite oder das Getriebe auf der anderen Seite möglichst weit voneinander anzuordnen.

Hierbei ist es günstig, daß eine oder mehrere, insbesondere lösbar angeordnete, Elemente für die starre Verbindung der statischen Einheiten des Elektromotors und des Getriebes sowie zur überbrückung des Abstandes zwischen diesen Einheiten vorgesehen sind.

Insbesondere sind die Elemente zur Überbrükkung des Abstandes Teil der statischen Einheit des Elektromotors und/oder des Getriebes.

Um ein Verklemmen der rotierenden Teile zu verhindern, sind die Welle der Antriebseinheit mit der rotierenden Einheit des Elektromotors und/oder die Welle der Antriebseinheit mit der rotierenden Einheit des Getriebes über Mittel zum Ausgleich radialer und axialer Relativbewegungen der Welle gegenüber der rotierenden Einheit des Elektromotors und des Getriebes versehen.

Hierdurch wird vermieden, daß durch die Relativbewegungen der Elektromotor beschädigt wird, der wie oben erwähnt, zwischen Rotor und Stator, also zwischen statischer Einheit und rotierender Einheit, einen geringen Spalt aufweist.

Gemäß einer Ausführungsform der Erfindung umfaßt das Getriebe ein Planetengetriebe, wobei insbesondere die Welle der Antriebseinheit die Welle-des Sonnenrades des Planetengetriebes bildet. Hierdurch wird eine unmittelbare Kraftübertragung ermöglicht und die Teileanzahl verringert.

Die Konstruktionsmöglichkeiten werden dadurch vergrößert, daß das Getriebe ein Achsversatzgetriebe umfaßt. Beispielsweise können nunmehr Elektromotoren mit einem großen Durchmesser verwendet werden, da bekanntlich der Durchmesser quadratisch und die Länge des Elektromotors bzw. der Spule linear in das Drehmoment des Elektromotors eingehen. Elektromotoren mit großen Durchmessern müssen daher aufgrund der engen Raumverhältnisse, beispielsweise in-Panzerkampfwagen, versetzt zu ihrem optimalen Ort, angeordnet werden, was mit dem Achsversatzgetriebe ohne weiteres möglich ist.

Für eine einfache Montage bildet das Achsversatzgetriebe mit dem Elektromotor eine Baueinheit.

Insbesondere um die Fahrzeugwanne und die darin enthaltenen empfindlichen Geräte vor Schwingungen zu schützen, ist ebenfalls das Kettenlaufwerk des Kettenfahrzeugs schwingungsmäßig gegenüber der Fahrzeugwanne entkoppelt. Dabei ist es für die Montage vorteilhaft, daß zumindest ein Teil der Schwingungsdämpfungsmittel der Antriebseinheit und des Kettenlaufwerkes eine gemeinsame Baueinheit bilden.

Um größere Bewegungen zwischen der Antriebseinheit und der Wandung der Fahrzeugwanne zu verhindern, sind Wegbegrenzungsmittel vorgesehen.

Insbesondere zur Erhöhung der konstruktiven Möglichkeiten der Anordnung der Antriebseinheit in der Fahrzeugwanne weist die Fahrzeugwanne eine Ausnehmung auf, die einem Teil der Antriebseinheit zugeordnet ist.

Um den Elektromotor vor mechanischen Einwirkungen von außen zu schützen, ist dieservollständig auf einer Seite der Wandung der Fahrzeugwanne angeordnet, insbesondere auf der Innenseite.

Unter dem gleichen Aspekt ist es vorteilhaft, daß das Getriebe sich teilweise in die Fahrzeugwanne hineinerstreckt.

Weitere Vorteile und Merkmale ergeben sich aus der folgenden Beschreibung mehrerer Ausführungsformen der Erfindung im Zusammenhang mit der Zeichnung. Es zeigen:
- Fig. 1: eine schematische Prinzipskizze der in der Fahrzeugwanne angeordneten Antriebseinheit mit Dieselaggregat-Steuerelektronik und Spannungsleitungen;
- Fig. 2: eine schematische Schnittansicht der in der Fahrzeugwanne angeordneten Antriebseinheit gemäß einer ersten Ausführungsform der Erfindung;
- Fig. 3: eine schematische Schnittansicht der in der Fahrzeugwanne angeordneten Antriebseinheit gemäß einer zweiten Ausführungsform der Erfindung;
- Fig. 4: eine schematische Schnittansicht der in der Fahrzeugwanne angeordneten Antriebseinheit gemäß einer dritten Ausführungsform der Erfindung;
- Fig. 5: eine schematische Schnittansicht der in der Fahrzeugwanne angeordneten Antriebseinheit gemäß einer vierten Ausführungsform der Erfindung;
- Fig. 6: eine schematische Schnittansicht der in der Fahrzeugwanne angeordneten Antriebseinheit gemäß einer fünften Ausführungsform der Erfindung;
- Fig. 7: eine schematische Schnittansicht der in der Fahrzeugwanne angeordneten Antriebseinheit gemäß einer sechsten Ausführungsform der Erfindung;
- Fig. 8: eine schematische Schnittansicht der in der Fahrzeugwanne angeordneten Antriebseinheit gemäß einer siebten Ausführungsform der Erfindung; und
- Fig. 9: eine schematische Schnittansicht der in der Fahrzeugwanne angeordneten Antriebseinheit gemäß einer achten Ausführungsform der Erfindung.

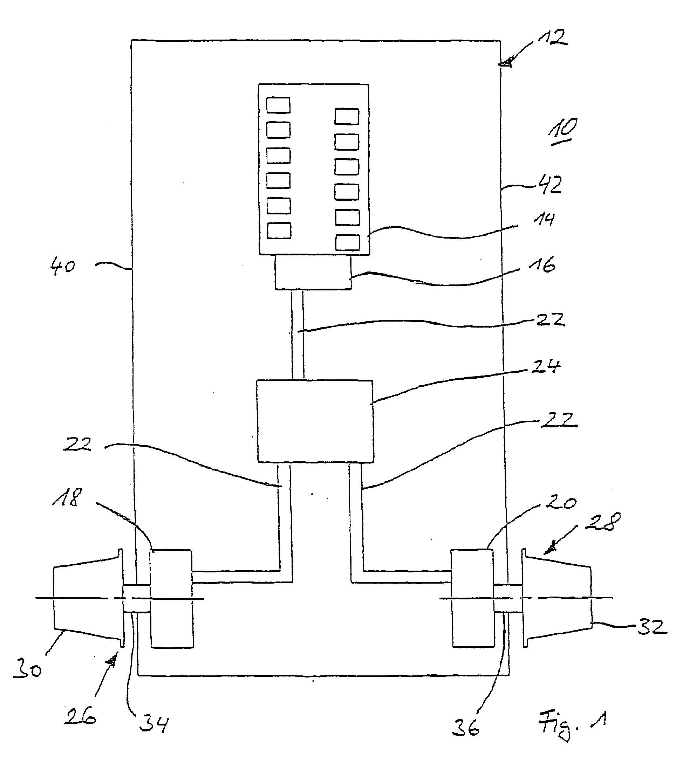

In Fig. 1 ist in einer schematischen Prinzipdarstellung ein Teil eines Kettenfahrzeuges 10, wie eines Panzerkampfwagens, dargestellt. Das Kettenfahrzeug 10 weist in bekannter Weise eine Fahrzeugwanne 12 auf, in der ein Dieselmotor 14 eingebracht ist. Der Dieselmotor 14 treibt einen Generator 16 an, der die Spannung für zwei Elektromotoren 18 und 20 bereitstellt. Der Generator 16 ist mit den Elektromotoren 18 und 20 über Leitungen 22 verbunden. Zwischen Generator 16 und den Elektromotoren 18-und 20 ist eine Steuerelektronik 24 zwischengeschaltet.

Der Elektromotor 18 bzw. 20 ist Teil einer Antriebseinheit 26 bzw. 28, die zudem ein Seitenvorgelege 30 bzw. 32 sowie ein das Seitenvorgelege 30, 32 mit dem Elektromotor 18, 20 verbindende Welle 34 bzw. 36 umfaßt.

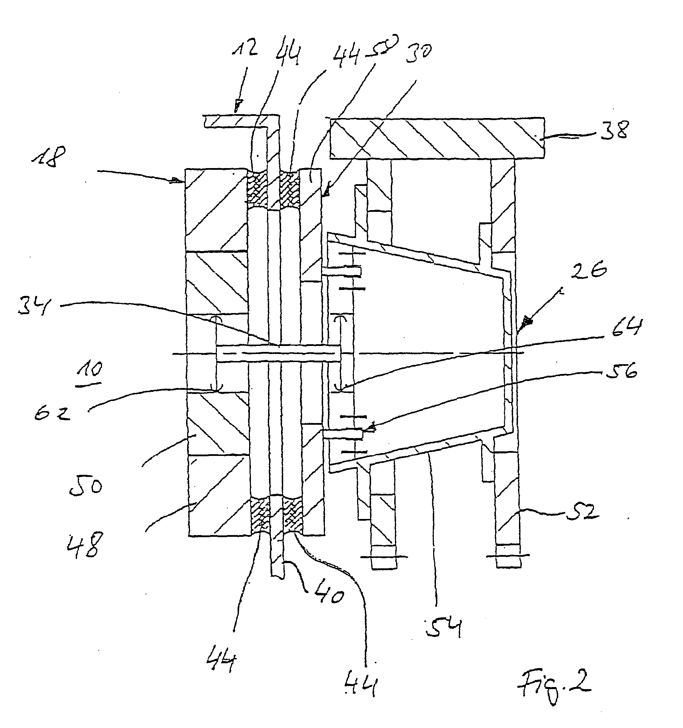

Die Antriebseinheiten 26 und 28 treiben jeweils eine Kette 38, siehe Fig. 2 bis 9 an, die jeweils von einem hier nicht dargestellten Ketienlaufwerk getragen und geführt wird.

Die Fahrzeugwanne 12 ist mit zwei Seitenwandungen 40 und 42 versehen. Die Seitenwandung 40 trägt die Antriebseinheit 26 und die Seitenwandung 42 die Antriebseinheit 28, d. h. die Antriebseinheiten 26, 28 sind in der-zugeordneten Seitenwandung 40, 42 gelagert.

Die Antriebseinheiten 26 und 28 sowie die Befestigung an der zugeordneten Seitenwandung 40, 42 ist jeweils gleich.

In den Fig. 2 bis 9 ist daher lediglich die Antriebseinheit 26 und deren Verbindung zur seitenwandung 40 dargestellt und beschrieben.

Die Antriebseinheit 26 ist gegenüber der Fahrzeugwanne schwingungsmäßig entkoppelt, indem zwischen Antriebseinheit 26 und der Fahrzeugwanne 12 Dämpfungsmittel 44 zwischengeschaltet sind.

In Fig. 2 ist in einer ersten Ausführungsform der Erfindung eine kreisförmige Ausnehmung 46 vorgesehen. Seitlich der Ausnehmung 46 sind die Dämpfungsmittel 44 in Form von Elastomerringen befestigt.

Der Elektromotor 18 besteht aus einer statischen Einheit 48 und einer rotierenden Einheit 50. Die statische Einheit 48 des Elektromotors 18 wird im wesentlichen durch den Stator, die Lager für den Rotor sowie durch das Motorgehäuse gebildet, wohingegen die rotierende Einheit 50 im wesentlichen durch den Rotor gebildet wird.

Das Seitenvorgelege 30 umfaßt ein in die Kette 38 eingreifendes Antriebszahnrad 52, das auf der Seitenvorgelegetrommel 54 fest angeordnet ist. Die Seitenvorgelegetrommel 54 wird über ein Planetengetriebe 56 angetrieben, das wiederum an die Welle 34 angeschlossen ist. Das Seitenvorgelege 30 bildet somit ein Getriebe zur Übertragung der Antriebsbewegung von der Welle 34 auf das Antriebszahnrad 52.

Auch das Seitenvorgelege 30 besteht aus einer statischen Einheit 58 und einer rotierenden Einheit 60. Die statische Einheit 58 umfaßt im wesentlichen die Lager des Planetengetriebes 56 sowie das Gehäuse des Seitenvorgeleges 30. Die rotierende Einheit 60 umfaßt die Zahnräder des Planetengetriebes 56 sowie die Seitenvorgelegetrommel 54.

Wie oben ausgeführt wurde, ist ein Dämpfungsmittel 44 in Form eines Elastomerringes an der Innenseite der Fahrzeugwanne 12 benachbart der Ausnehmung 46 angeordnet. Hieran schließt sich die statische Einheit 48 des Elektromotors 18 an. Auf der Außenseite der Fahrzeugwanne 12 sind an der Seitenwandung 40 ebenfalls Dämpfungsmittel 44 in Form eines Elastomerringes benachbart der Ausnehmung 46 angebracht. An diese Dämpfungsmittel 44 ist die statische Einheit 58 des Seitenvorgeleges angeschlossen. Auf diese Weise ist die Antriebseinheit 26 schwingungsmäßig von der Fahrzeugwanne 12 entkoppelt.

Die Welle 34 ist mit der rotierenden Einheit 50 des Elektromotors über eine kardanische Verbindung 62 sowie mit einem Anschlußkranz des Seitenvorgeleges über eine kardanische Verbindung 64 verbunden. Durch diese kardanische Verbindung wird ermöglicht, daß zum einen das Drehmoment des Elektromotors 18 übertragen wird, jedoch zum anderen axiale und radiale Relativbewegungen zwischen der Welle 34 und der rotierenden Einheit 50 des Elektromotors 18 sowie zwisch en der Welle 34 und der rotierenden Einheit 60 des Seitenvorgeleges 30 ausgegl-ichen werden.

Die Dämpfungsmittel 44 sind so ausgelegt, daß diezu übertragenden Momente aufgenommen werden können. Für hohe Momente können Wegbegrenzungsmittel in Form von Starranschlägen vorgesehen sein.

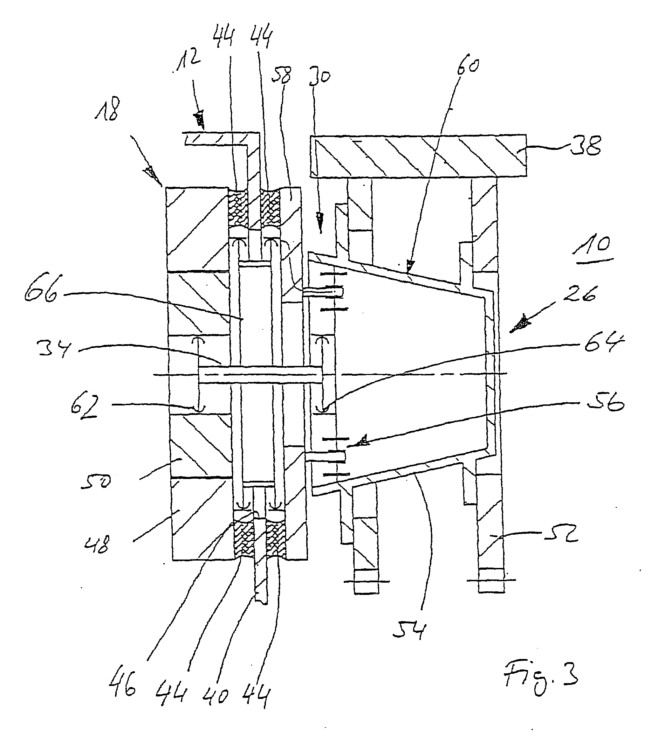

In Fig. 3 ist in einer Querschnittsansicht eine dritte Ausführungsform der Erfindung dargestellt. Sie unterscheidetsich von der ersten, in Fig. 2 dargestellten Ausführungsform dadurch, daß über die Ausnehmung 46 die statischen Einheiten 48 und 50 über ein Drehmomentenübertragungselement 66 verbunden sind, das sich durch die Ausnehmung 46 in der Seitenwandung 40 der Fahnzeugwanne 12 erstreckt. Über das Drehmomentenübertragungselement 66 werden lediglich die Drehmomente übertragen, nicht jedoch axiale und radiale Relativbewegungen der statischen Einheiten 48 und 58 zueinander.

Hierdurch werden die Dämpfungsmittel 44 gleichmäßig belastet und von Drehmomenten entlastet, wobei jedoch die Schwingungsisolierung zur Fahrzeugwanne 12 voll erhalten bleibt. Zudem wird der Anteil der Schwingungsübertragung der rotierenden Einheiten 50 und 60 aufeinander reduziert.

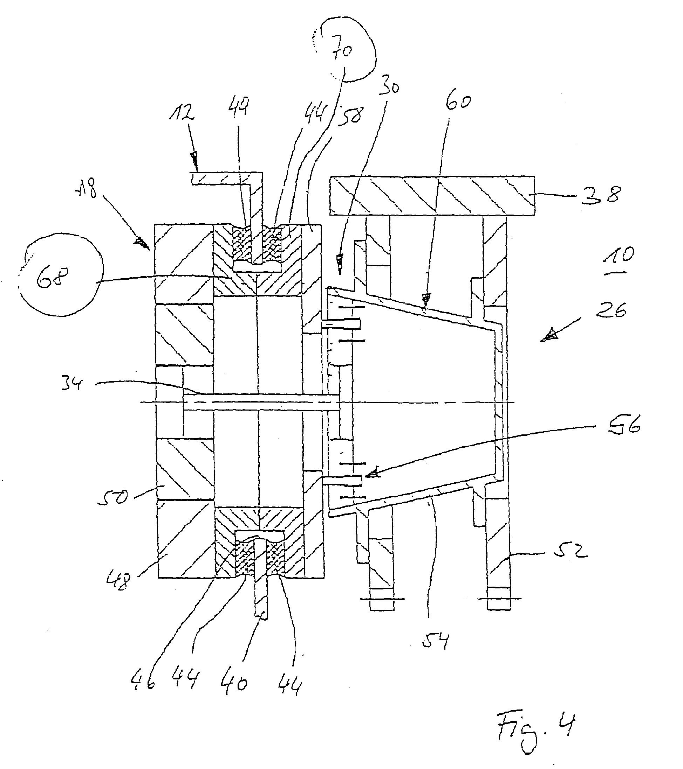

In Fig. 4 ist in einer schematischen Querschnittsansicht eine dritte Ausführungsform der Erfindung dargestellt. Die beiden statischen Einheiten 48 und 58 sind durch zwei Abstandsringe 68 und 70 über die Ausnehmung 46 starr miteinander verbunden. Eine kardanische Verbindung zwischen den rotierenden Einheiten 50 und 60 ist im Gegensatz zu der zweiten Ausführungsform, die in Fig. 3 dargestellt ist, nicht vorgesehen. Da der Elektromotor 18 und das Seitenvorgelege 30 keine Relativbewegungen zueinander mehr ausführen können, genügt beispielsweise eine einfache als Steckwelle ausgeführte Welle 34 zur Übertragung des Drehmoments von dem Elektromotor 18 auf das Planetengetriebe 56.

Durch die Abstandsringe 68 und 70 ergeben sich weitere konstruktive Möglichkeiten, beispielsweise können dadurch der Elektromotor 18 und das Seitenvorgelege 30 in vorbestimmten Abständen zueinander angeordnet werden. Die starre Verbindung zwischen den statischen Einheiten 48 und 50 ist für Montagezwecke lösbar ausgebildet. Der Elektromotor 18 ist innerhalb der Fahrzeugwanne 12 und das Seitenvorgelege 30 außerhalb der Fahrzeugwanne 12 angeordnet.

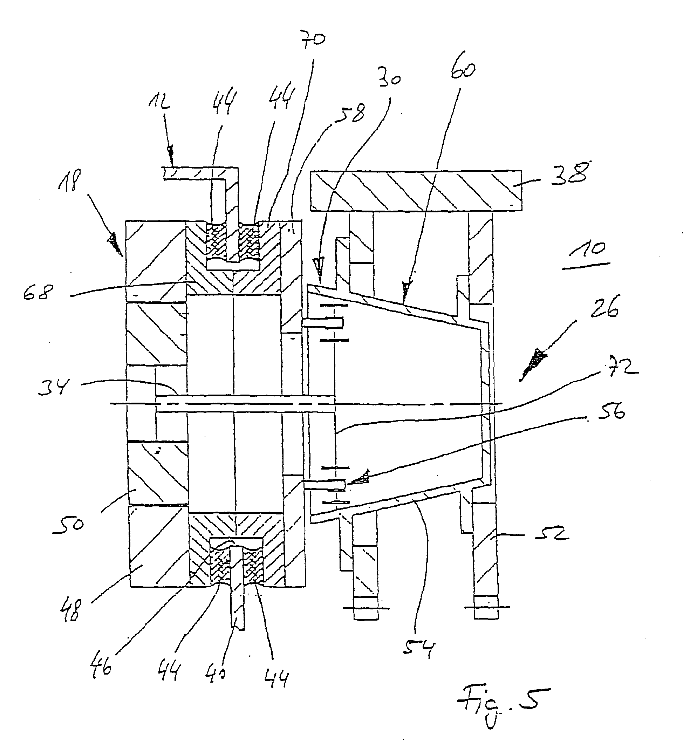

In Fig. 5 ist In einer Querschnittsansicht eine vierte Ausführungsform der Erfindung dargestellt. Sie unterscheidet sich von der dritten, in Fig. 4 dargestellten Ausführungsform dadurch, daß die Welle 34 des Elektromotors 18 die Welle 34 für das Sonnenrad 72 des Planetengetriebes 56 bildet, wodurch der Fertigungsaufwand verringert wird.

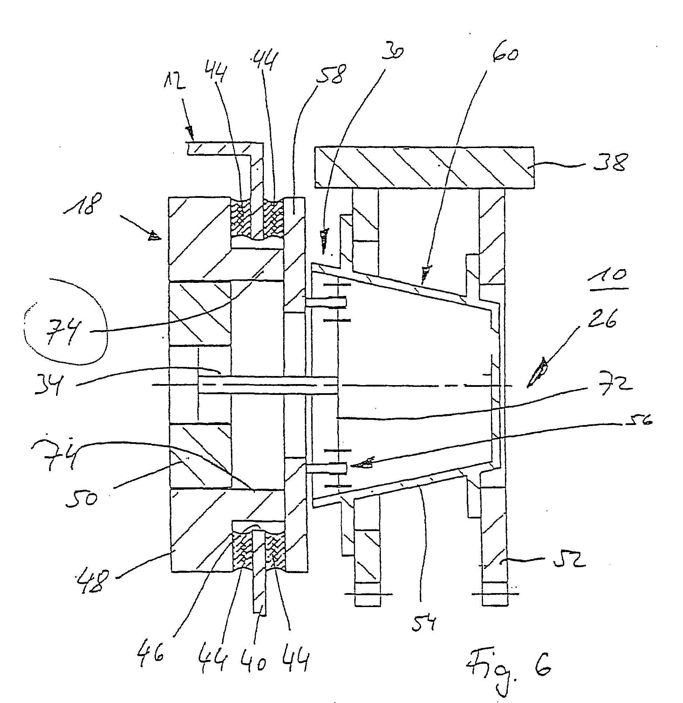

In Fig. 6 ist eine fünfte Ausführungsform der Erfindung in einer Querschnittsansicht schematisch dargestellt. Die fünfte Ausführungsform unterscheidet sich von der in Fig. 5 dargestellten vierten Ausführungsform dadurch, daß statt der Abstandsringe 68 und 70 die statische Einheit 48 des Elektromotors 18 einen Vorsprung 74 aufweist, der starr an der statischen Einheit 58 des Seitenvorgeleges anliegt. Hierdurch kann die Zahl der Montageteile einfach verringert werden.

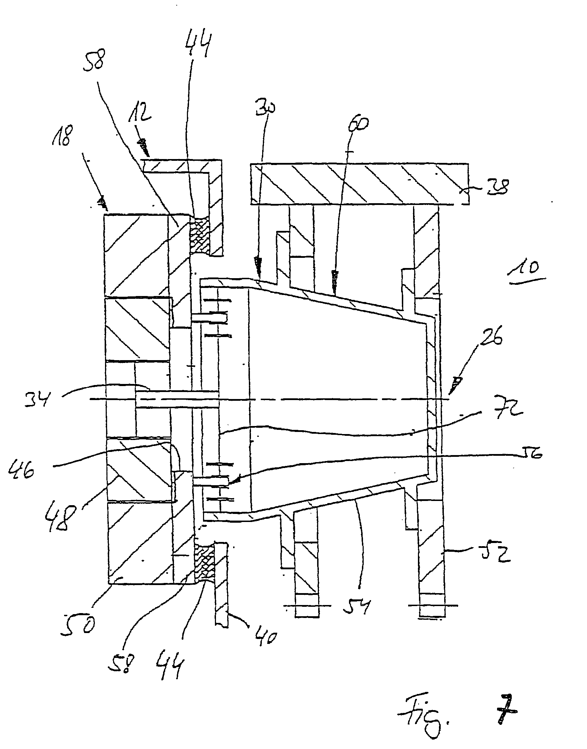

In Fig. 7 ist in einer schematischen Querschnittsansicht eine sechste Ausführungsform der Erfindung dargestellt. Die Dämpfungsmittel 44 sind dieses Mal auf der Innenseite der Fahrzeugwanne 12 benachbart der kreisförmigen Ausnehmung 46 angeordnet und die statische Einheit 58 des Seitenvorgeleges 30 ist hierüber mit der Fahrzeugwanne 12 verbunden. Die Seitenvorgelegetrommel 54 und die Antriebseinheit 26 sind insgesamt mehr in der Fahrzeugwanne 12 und somit die Kette 38 näher an der Seitenwandung 40 angeordnet, wodurch bei vorgegebener Gesamtbreite des Kettenfahrzeugs 10 die Fahrzeugwanne 12 möglichst breit ausgebildet werden kann. Die Ausnehmung 46 ist dabei an die Seitenvorgelegetrommel 54 angepaßt.

Die Seitenvorgelegetrommel 54 ist zudem nicht über ihre ganze Länge konisch ausgebildet. Vielmehr schließt sich im hinteren Bereich ein zylindrischer Bereich an, der raumsparend die Seitenvorgelegetrommel 54 verlängert.

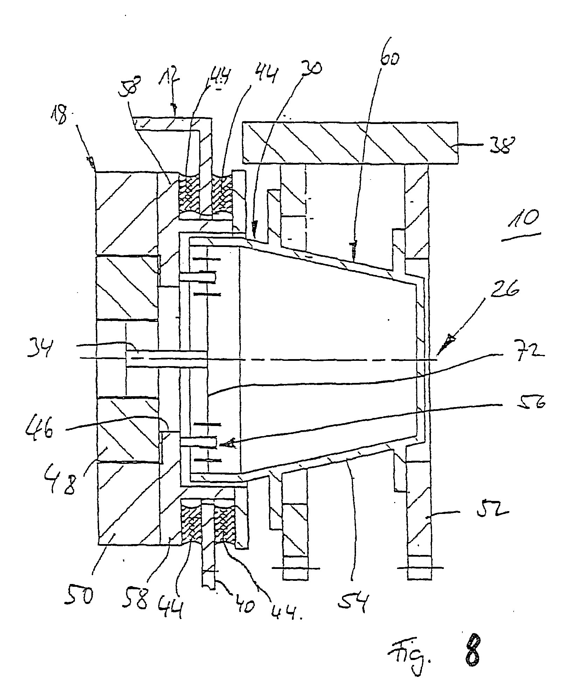

In Fig. 8 ist in einer schematischen Querschnittsansicht eine sichte Ausführungsform der Erfindung dargestellt.

Die Dämpfungsmittel 44 sind auch dieses Mal sowohl auf der Innenseite als auch auf der Außenseite der Fahrzeugwanne 12 angeordnet. Die statische Einheit 30 umgreift U-förmig durch die Ausnehmung 46 die Dämpfungsmittel 44, so daß die ganze Antriebseinheit 26 über die statische Einheit 30 an die Fahrzeugwanne 12 angeschlossen ist.

Ansonsten entspricht diese Ausführungsform der anhand der Fig. 7 beschriebenen Ausführungsform.

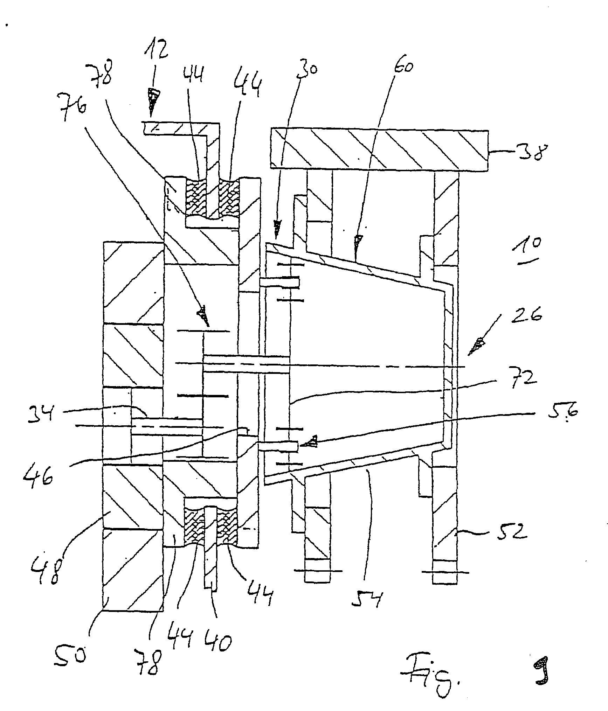

In Fig. 9 ist in einer schematischen Querschnittsansicht eine achte Ausführungsform der Erfindung dargestellt. Zwischen dem Elektromotor 18 und dem Seitenvorgelege 30 ist ein Achsversatzgetriebe 76 zwischengeschaltet. über das Achsversatzgetriebe 76 wird das Planetengetriebe 56 angetrieben, wobei die Welle 34 den Elektromotor 18 und das Achsversatzgetriebe 76 verbindet. Für eine einfache Montage bilden der Elektromotor 18, die Welle 34 und das Achsversatzgetriebe 76 eine Baueinheit.

Wie in der vorhergehenden anhand von Fig. 8 beschriebenen Ausführungsform sind auf beiden Seiten der Wandung 40 die Dämpfungsmittel 44 vorgesehen. Zudem ist ein das innere Dämpfungsmittel 44 und die statische Einheit 48 des Elektromotors 18 sowie die statische Einheit58 des Seitenvorgeleges 30 verbindender Abstandsring 78 vorgesehen.

Die Erfindung zeichnet sich durch die einfache Möglichkeit aus, die Antriebseinheit 26 schwingungsmäßig von der Fahrzeugwanne 12 zu entkoppeln sowie durch die sich dadurch ergebenden vielfältigen konstruktiven Möglichkeiten der Anordnung der einzelnen Teile der Antriebseinheit in der Fahrzeugwanne 12

### Bezugszeichenliste

- 10: Kettenfahrzeug
- 12: Fahrzeugwanne
- 14: Dieselmotor
- 16: Generator
- 18: Elektromotor - links
- 20: Elektromotor - rechts
- 22: Leitung
- 24: Steuerelektronik
- 26: Antriebseinheit - links
- 28: Antriebseinheit - rechts
- 30: Seitenvorgelege - links
- 32: Seitenvorgelege - rechts
- 34: Welle - links
- 36: Welle - rechts
- 38: Kette
- 40: Seitenwandung der Fahrzeugwanne - links
- 42: Seitenwandung der Fahrzeugwanne - rechts
- 44: Dämpfungsmittel
- 46: Ausnehmung
- 48: statische Einheit - Elektromotor
- 50: rotierende Einheit - Elektromotor
- 52: Antriebszahnrad
- 54: Seitenvorgelegetrommel
- 56: Planetengetriebe
- 58: statische Einheit - Seitenvorgelege/Getriebe
- 60: rotierende Einheit - Seitenvorgelege/Getriebe
- 62: kardanische Verbindung
- 64: kardanische Verbindung
- 66: Drehmomentenübertragungselement
- 68: Abstandsringe - links
- 70: Abstandsringe - rechts
- 72: Sonnenrad
- 74: Vorsprung
- 76: Achsversatzgetriebe
- 78: Abstandsring

## Patentansprüche

1. Kettenfahrzeug (10) mit angetriebenen Ketten (38), mit einer Antriebseinheit (26, 28) für jede angetriebene Kette (38) umfassend ein in die Kette (38) eingreifendes Antriebsrad (52), einen Motor, ein dem Antriebsrad (52) vorgeschaltetes Getriebe (30, 32) und eine den Motor und das Getriebe (30, 32) triebschlüssig miteinander verbindende Welle (34, 36); und mit einer Fahrzeugwanne (12), die jeweils an einer Wandung (40, 42) das dem Antriebsrad vorgeschaltete Getriebe (30, 32) trägt, wobei zwischen dem Getriebe (30, 32) und der Wandung (40, 42) ein Schwingungsdämpfungsmittel (44) angeordnet ist, **dadurch gekennzeichnet, dass** die gesamte Antriebseinheit (26, 28) in der zugeordneten Seitenwandung (40, 42) der Fahrzeugwanne (12) direkt oder über Abstandsringe (68, 70, 78) gelagert ist, wobei das Getriebe (30, 32) und der als Elektromotor (18, 20) ausgeführte Motor jeweils eine statische Einheit (48, 58) und eine rotierende Einheit (50, 60) umfassen, und die statische Einheit (48, 58) des Getriebes (30, 32) und/oder des Elektromotors (18, 20) über Schwingungsdämpfungsmittel (44) mit der Seitenwandung (40, 42) derart verbunden sind, dass die gesamte Antriebseinheit (26 28) von der Seitenwandung (40, 42) der Fahrzeugwanne (12) schwingungsmäßig entkoppelt ist.

2. Kettenfahrzeug nach Anspruch 1, **dadurch gekennzeichnet, dass** die Schwingungsdämpfungsmittel (44) an einer Seite der Seitenwandung (40, 42) vorgesehen sind.

3. Kettenfahrzeug nach Anspruch 2, **dadurch gekennzeichnet, dass** die Schwingungsdämpfungsmittel (44) an der Außenseite der Seitenwandung (40, 42) angeordnet sind.

4. Kettenfahrzeug nach Anspruch 2, **dadurch gekennzeichnet, dass** die Schwingungsdämpfungsmittel (44) an der Innenseite der Seitenwandung (40, 42) angeordnet sind.

5. Kettenfahrzeug nach Anspruch 1, **dadurch gekennzeichnet, dass** sowohl an der Innenseite als auch an der Außenseite der Seitenwandung (40, 42) Schwingungsdämpfungsmittel (44) angeordnet sind.

6. Kettenfahrzeug nach Anspruch 5, **dadurch gekennzeichnet, dass** die statische Einheit (48) des Elektromotors (18, 20) mit dem Schwingungsdämpfungsmittel (44) auf der Innenseite und die statische Einheit (58) des Getriebes (30, 32) mit dem Schwingungsdämpfungsmittel (44) auf der Außenseite der Seitenwandung (40, 42) der Fahrzeugwanne (12) verbunden ist.

7. Kettenfahrzeug nach einem der vorangehenden Ansprüche, **dadurch gekennzeichnet, dass** die statischen Einheiten (48, 58) des Elektromotors (18, 20) und des Getriebes (30, 32) starr miteinander verbunden sind.

8. Kettenfahrzeug nach Anspruch 7, **dadurch gekennzeichnet, dass** ein oder mehrere, insbesondere lösbar angeordnete, Elemente (74) für die starre Verbindung der statischen Einheiten (48, 58) des Elektromotors (18, 20) und des Getriebes (30, 32) zur Überbrückung des Abstandes zwischen diesen Einheiten (48, 58) vorgesehen sind.

9. Kettenfahrzeug nach Anspruch 8, **dadurch gekennzeichnet, dass** die Elemente (74) zur Überbrückung des Abstandes Teil der statischen Einheit (48, 58) des Elektromotors (18, 20) und/oder des Getriebes (30, 32) sind.

10. Kettenfahrzeug nach einem der vorangehenden Ansprüche, **dadurch gekennzeichnet, dass** die statischen Einheiten (48, 58) des Getriebes (30, 32) und des Elektromotors (18, 20) über Mittel (66) zur Übertragung eines Drehmomentes miteinander verbunden sind, die einen Ausgleich radialer und axialer Relativbewegungen der statischen Einheiten (48, 58) zueinander ermöglichen.

11. Kettenfahrzeug nach einem der vorangehenden Ansprüche, **dadurch gekennzeichnet, dass** die Welle (34, 36) der Antriebseinheit (26, 28) mit der rotierenden Einheit (60) des Elektromotors (18, 20) und/oder die Welle (34, 36) der Antriegseinheit (26, 28) mit der rotierenden Einheit (60) des Getriebes (30, 32) über Mittel (62, 64) zum Ausgleich radialer und axialer Relativbewegungen der Welle (34,36) gegenüber der rotierenden Einheit (50, 60) des Elektromotors (18, 20) und des Getriebes (30, 32) versehen sind.

12. Kettenfahrzeug nach einem der vorangehenden Ansprüche, **dadurch gekennzeichnet, dass** das Getriebe (30, 32) ein Planetengetriebe (56) umfasst.

13. Kettenfahrzeug nach Anspruch 12, **dadurch gekennzeichnet, dass** die Welle (34, 36) der Antriebseinheit (26, 28) die Welle (34, 36) des Sonnenrades (72) des Planetengetriebes (56) bildet.

14. Kettenfahrzeug nach einem der vorangehenden Ansprüche, **dadurch gekennzeichnet, dass** das Getriebe (30, 32) ein Achsversatzgetriebe (76) umfasst.

15. Kettenfahrzeug nach Anspruch 14, **dadurch gekennzeichnet, dass** das Achsversatzgetriebe (76) mit dem Elektromotor (18, 20) eine Baueinheit bildet.

16. Kettenfahrzeug nach einem der vorangehenden Ansprüche, **gekennzeichnet durch** ein Kettenlaufwerk, das schwingungsmäßig gegenüber der Fahrzeugwanne (12) entkoppelt ist.

17. Kettenfahrzeug nach Anspruch 16, **dadurch gekennzeichnet, daß** zumindest ein Teil der Schwingungsdämpfungsmittel (44) der Antriebseinheit (26, 28) und des Kettenlaufwerks eine gemeinsame Baueinheit bilden.

18. Kettenfahrzeug nach einem der vorangehenden Ansprüche, **dadurch gekennzeichnet, dass** zur Vermeidung größerer Bewegungen zwischen der Antriebseinheit (26, 28) und der Seitenwandung (40, 42) der Fahrzeugwanne (12) Wegbegrenzungsmittel vorgesehen sind.

19. Kettenfahrzeug nach einem der vorangehenden Ansprüche, **dadurch gekennzeichnet, dass** die Fahrzeugwanne (12) eine Ausnehmung (46) aufweist, die einem Teil der Antriebseinheit (26, 28) zugeordnet ist.

20. Kettenfahrzeug nach Anspruch 19, **dadurch gekennzeichnet, daß** das Getriebe (30, 32) sich teilweise in die Fahrzeugwanne (12) hineinerstreckt.

21. Kettenfahrzeug nach einem der vorangehenden Ansprüche, **dadurch gekennzeichnet, daß** der Elektromotor (18, 20) vollständig auf einer Seite der Seitenwandung (40, 42) angeordnet ist.

## Claims

1. Tracked vehicle (10) having driven tracks (38), having for each driven track (38) a drive unit (26, 28) comprising a driving wheel (52), which engages into the track (38), a motor, a transmission (30, 32) disposed upstream of the driving wheel (52), and a shaft (34, 36) connecting the motor and the transmission (30, 32) in a power-locking manner to one another; and having a vehicle cradle (12), which carries in each case on a wall (40, 42) the transmission (30, 32) disposed upstream of the driving wheel, wherein a vibration-damping means (44) is disposed between the transmission (30, 32) and the wall (40, 42), **characterized in that** the entire drive unit (26, 28) is supported directly or via spacer rings (68, 70, 78) in the associated side wall (40, 42) of the vehicle cradle (12), wherein the transmission (30, 32) and the motor in the form of an electric motor (18, 20) comprise in each case a static unit (48, 58) and a rotating unit (50, 60), and the static unit (48, 58) of the transmission (30, 32) and/or of the electric motor (18, 20) are connected by vibration-damping means (44) to the side wall (40, 42) in such a way that the entire drive unit (26, 28) is isolated in terms of vibrations from the side wall (40, 42) of the vehicle cradle (12).

2. Tracked vehicle according to claim 1, **characterized in that** the vibration-damping means (44) are provided at one side of the side wall (40, 42).

3. Tracked vehicle according to claim 2, **characterized in that** the vibration-damping means (44) are disposed on the outside of the side wall (40, 42).

4. Tracked vehicle according to claim 2, **characterized in that** the vibration-damping means (44) are disposed on the inside of the side wall (40, 42).

5. Tracked vehicle according to claim 1, **characterized in that** vibration-damping means (44) are disposed both on the inside and on the outside of the side wall (40, 42).

6. Tracked vehicle according to claim 5, **characterized in that** the static unit (48) of the electric motor (18, 20) is connected to the vibration-damping means (44) at the inside and the static unit (58) of the transmission (30, 32) is connected to the vibration-damping means (44) at the outside of the side wall (40, 42) of the vehicle cradle (12).

7. Tracked vehicle according to one of the preceding claims, **characterized in that** the static units (48, 58) of the electric motor (18, 20) and of the transmission (30, 32) are rigidly connected to one another.

8. Tracked vehicle according to claim 7, **characterized in that** one or more, in particular detachably disposed, elements (74) for the rigid connection of the static units (48, 58) of the electric motor (18, 20) and of the transmission (30, 32) are provided for bridging the distance between said units (48, 48).

9. Tracked vehicle according to claim 8, **characterized in that** the elements (74) for bridging the distance are part of the static unit (48, 58) of the electric motor (18, 20) and/or of the transmission (30, 32).

10. Tracked vehicle according to one of the preceding claims, **characterized in that** the static units (48, 58) of the transmission (30, 32) and of the electric motor (18, 20) are connected to one another by torque-transmitting means (66), which enable a compensation of radial and axial movements of the static units (48, 58) relative to one another.

11. Tracked vehicle according to one of the preceding claims, **characterized in that** the shaft (34, 36) of the drive unit (26, 28) is provided with the rotating unit (60) of the electric motor (18, 20) and/or the shaft (34, 36) of the drive unit (26, 28) is provided with the rotating unit (60) of the transmission (30, 32) via means (62, 64) of compensating radial and axial movements of the shaft (34, 36) relative to the rotating element (50, 60) of the electric motor (18, 20) and of the transmission (30, 32).

12. Tracked vehicle according to one of the preceding claims, **characterized in that** the transmission (30, 32) comprises a planetary transmission (56).

13. Tracked vehicle according to claim 12, **characterized in that** the shaft (34, 36) of the drive unit (26, 28) forms the shaft (34, 36) of the sun wheel (72) of the planetary transmission (56).

14. Tracked vehicle according to one of the preceding claims, **characterized in that** the transmission (30, 32) comprises an axle offset transmission (76).

15. Tracked vehicle according to claim 14, **characterized in that** the axle offset transmission (76) together with the electric motor (18, 20) forms a constructional unit.

16. Tracked vehicle according to one of the preceding claims, **characterized by** track running gear, which is isolated in terms of vibrations from the vehicle cradle (12).

17. Tracked vehicle according to claim 16, **characterized in that** at least some of the vibration-damping means (44) of the drive unit (26, 28) and of the track running gear form a common constructional unit.

18. Tracked vehicle according to one of the preceding claims, **characterized in that**, for preventing larger movements between the drive unit (26, 28) and the side wall (40, 42) of the vehicle cradle (12), displacement-limiting means are provided.

19. Tracked vehicle according to one of the preceding claims, **characterized in that** the vehicle cradle (12) has a recess (46), which is associated with a part of the drive unit (26, 28).

20. Tracked vehicle according to claim 19, **characterized in that** the transmission (30, 32) extends partially into the vehicle cradle (12).

21. Tracked vehicle according to one of the preceding claims, **characterized in that** the electric motor (18, 20) is disposed entirely at one side of the side wall (40, 42).

## Revendications

1. Véhicule chenillé (10), comportant des chenilles entraînées (38), une unité d'entraînement (26, 28) pour chaque chenille entraînée (38), comprenant une roue d'entraînement (52) qui s'engage dans la chenille (38), un moteur, un mécanisme de transmission (30, 32) agencé en amont de la roue d'entraînement (52) et un arbre (34, 36) qui relie le moteur et le mécanisme de transmission (30, 32) en coopération d'entraînement l'un à l'autre ; et comportant une coque de véhicule (12) qui porte sur une paroi respective (40, 42) le mécanisme de transmission (30, 32) agencé en amont de la roue d'entraînement, des moyens d'amortissement d'oscillations (44) étant agencés entre le mécanisme de transmission (30, 32) et la paroi (40, 42), **caractérisé en ce que** la totalité de l'unité d'entraînement (26, 28) est montée soit directement soit via des anneaux écarteurs (68, 70, 78) dans la paroi latérale (40, 42) associée de la coque de véhicule (12), le mécanisme de transmission (30, 32) et le moteur réalisé sous forme de moteur électrique (18, 20) comportent chacun une unité statique (48, 58) et une unité rotative (50, 60), et l'unité statique (48, 58) du mécanisme de transmission (30, 32) et/ou du moteur électrique (18, 20) est reliée à la paroi latérale (40, 42) via des moyens d'amortissement d'oscillations (44) de telle sorte que la totalité de l'unité d'entraînement (26, 28) est découplée, quant aux oscillations, de la paroi latérale (40, 42) de la coque de véhicule (12).

2. Véhicule chenillé selon la revendication 1, **caractérisé en ce que** les moyens d'amortissement d'oscillations (44) sont prévus sur un côté de la paroi latérale (40, 42).

3. Véhicule chenillé selon la revendication 2, **caractérisé en ce que** les moyens d'amortissement d'oscillations (44) sont agencés sur le côté extérieur de la paroi latérale (40, 42).

4. Véhicule chenillé selon la revendication 2, **caractérisé en ce que** les moyens d'amortissement d'oscillations (44) sont agencés sur le côté intérieur de la paroi latérale (40, 42).

5. Véhicule chenillé selon la revendication 1, **caractérisé en ce que** des moyens d'amortissement d'oscillations (44) sont agencés aussi bien sur le côté intérieur que sur le côté extérieur de la paroi latérale (40, 42).

6. Véhicule chenillé selon la revendication 5, **caractérisé en ce que** l'unité statique (48) du moteur électrique (18, 20) est reliée aux moyens d'amortissement d'oscillations (44) sur le côté intérieur et l'unité statique (58) du mécanisme de transmission (30, 32) est reliée aux moyens d'amortissement d'oscillations (44) sur le côté extérieur de la paroi latérale (40, 42) de la coque de véhicule (12).

7. Véhicule chenillé selon l'une des revendications précédentes, **caractérisé en ce que** les unités statiques (48, 58) du moteur électrique (18, 20) et du mécanisme de transmission (30, 32) sont reliées de façon rigide l'une à l'autre.

8. Véhicule chenillé selon la revendication 7, **caractérisé en ce qu'**il est prévu un ou plusieurs éléments (74) agencés en particulier de façon détachable pour la liaison rigide des unités statiques (48, 58) du moteur électrique (18, 20) et du mécanisme de transmission (30, 32) pour combler la distance entre ces unités (48, 58).

9. Véhicule chenillé selon la revendication 8, **caractérisé en ce que** les éléments (74) pour combler la distance font partie de l'unité statique (48, 58) du moteur électrique (18, 20) et/ou du mécanisme de transmission (30, 32).

10. Véhicule chenillé selon l'une quelconque des revendications précédentes, **caractérisé en ce que** les unités statiques (48, 58) du mécanisme de transmission (30, 32) et du moteur électrique (18, 20) sont reliées l'une à l'autre via des moyens (66) pour transmettre un couple de rotation qui permettent une compensation de mouvements relatifs radiaux et axiaux des unités statiques (48, 58) l'une par rapport à l'autre.

11. Véhicule chenillé selon l'une des revendications précédentes, **caractérisé en ce que** l'arbre (34, 36) de l'unité d'entraînement (26, 28) est pourvu de l'unité rotative (50) du moteur électrique (18, 20) et/ou l'arbre (34, 36) de l'unité d'entraînement (26, 28) est pourvu de l'unité rotative (60) du mécanisme de transmission (30, 32) via des moyens (62, 64) pour compenser des mouvements relatifs radiaux et axiaux de l'arbre (34, 36) par rapport à l'unité rotative (50, 60) du moteur électrique (18, 20) et du mécanisme de transmission (30, 32).

12. Véhicule chenille selon l'une des revendications précédentes, **caractérisé en ce que** le mécanisme de transmission (30, 32) comprend une transmission à planétaires (56).

13. Véhicule chenillé selon la revendication 12, **caractérisé en ce que** l'arbre (34, 36) de l'unité d'entraînement (26, 28) forme l'arbre (34, 36) de la roue solaire (72) de la transmission à planétaires (56).

14. Véhicule chenillé selon l'une des revendications précédentes, **caractérisé en ce que** le mécanisme de transmission (30, 32) comprend une transmission à déport d'axe (76).

15. Véhicule chenillé selon la revendication 14, **caractérisé en ce que** la transmission à déport d'axe (76) forme une unité structurelle avec le moteur électrique (18, 20).

16. Véhicule chenillé selon l'une des revendications précédentes, **caractérisé par** un train de chenille qui est découplé, quant aux oscillations, par rapport à la coque de véhicule (12).

17. Véhicule chenillé selon la revendication 16, **caractérisé en ce qu'**une partie au moins des moyens d'amortissement d'oscillations (44) de l'unité d'entraînement (26, 28) et du train de chenille forment une unité structurelle commune.

18. Véhicule chenillé selon l'une des revendications précédentes, **caractérisé en ce que** pour éviter des mouvements plus grands entre l'unité d'entraînement (26, 28) et la paroi latérale (40, 42) de la coque de véhicule (12), il est prévu des moyens de limitation de course.

19. Véhicule chenillé selon l'une des revendications précédentes, **caractérisé en ce que** la coque de véhicule (12) comprend un évidement (46) qui est associé à une partie de l'unité d'entraînement (26, 28).

20. Véhicule chenillé selon la revendication 19, **caractérisé en ce que** le mécanisme de transmission (30, 32) s'étend partiellement jusque dans la coque de véhicule (12).

21. Véhicule chenillé selon l'une des revendications précédentes, **caractérisé en ce que** le moteur électrique (18, 20) est agencé complètement sur un côté de la paroi latérale (40, 42).
